# EUROPÄISCHE PATENTSCHRIFT

(11) **EP 2 859 415 B1**
(45) Veröffentlichungstag und Bekanntmachung des Hinweises auf die Patenterteilung: **22.03.2017**
(21) Anmeldenummer: 13728163.0
(22) Anmeldetag: 07.06.2013
(51) Int. Cl.: G05B 13/02

(54) **VERFAHREN ZUR VERARBEITUNG VON DATEN**
METHOD FOR PROCESSING DATA
PROCÉDÉ DE TRAITEMENT DE DONNÉES

(30) Priorität: 08.06.2012 AT 502252012
(43) Veröffentlichungstag der Anmeldung: 15.04.2015
(73) Patentinhaber: AVL List GmbH, 8020 Graz (AT)
(72) Erfinder: STORFER, Gerhard, A-9400 Wolfsberg (AT); THAMERL, Stefan, A-8010 Graz (AT); SCHUCH, Nikolas, A-7536 Güttenbach (AT)
(74) Vertreter: Patentanwälte Pinter & Weiss OG
(86) Internationale Anmeldenummer: PCT/EP2013/061796
(87) Internationale Veröffentlichungsnummer: WO 2013/182681

(56) Entgegenhaltungen:
- DE-A1-102007 021 592

## Beschreibung

Die Erfindung betrifft ein Verfahren zur Verarbeitung von Daten mit Parametern eines Fahrzeugs, Triebstranges oder einer Triebstrangkomponente unterschiedlicher Herkunft, umfassend das Auslesen von aus früheren Kalibrierungen von Fahrzeugen, Triebsträngen oder Triebstrangkomponenten gewonnenen Daten aus einer Datenbank.

Aus Test- und Prüfläufen von Fahrzeugen oder deren Teilsystemen fällt eine enorme Menge von Kalibrierdaten an, die jedoch im Moment völlig unabhängig zueinander gespeichert und nicht miteinander in Relation gebracht werden. Daher kann indirekt in diesen historischen Datenständen gespeichertes Wissen nicht genutzt werden.

Beispiele für sogenanntes "Data Mining" zur Auswertung von historischen Daten sind etwa die Extraktion/Ranking bei Suche durch Suchmaschinen, die Klassifizierung in Spamfiltern, die Warenkorbanalyse bei Online-Warenhäusern, aber auch die Mängelbehebung von Schadensfällen bei Autobauern.

Die Problematik des "Data Mining" speziell im Bereich der Kalibrierdaten, z.B. für die Entwicklung bzw. Kalibrierung eines Motorsteuergeräts eines Verbrennungsmotors, eines Fahrzeugs, Triebstranges oder einer Triebstrangkomponente, wird aus folgendem Beispiel deutlich:
Ein Datenstand beinhaltet zwischen 15.000 und 30.000 verschieden Label (Parameter). Pro Entwicklungsprojekt gibt es ca. 100 Datenstände für jede Fahrzeug / Motor / Getriebe - Variante (Ausprägung). Wird außerdem noch die zeitliche Abhängigkeit berücksichtigt, dann ergibt dies bei einem einzigen Projekt, welches über zwei Jahre läuft, eine Anzahl von ca. 300 Mio. Label (30.000 Label * 100 Varianten * 50 Wochen * 2 Jahre).

Kalibirierung eines Fahrzeugs, Triebstranges oder einer Triebstrangkomponente bedeutet allgemein, dass alle Motorparameter, Steuerparameter, Karosserieparameter, Triebstrangparameter, Steuergeräteparameter, etc., die sich auch gegenseitig beeinflussen können, so konfiguriert werden, dass das Fahrzeug, der Triebstrang oder eine Triebstrangkomponente einwandfrei läuft. Kalibrierung bedeutet auch, dass der Verbrennungsmotor so eingestellt wird, insbesondere durch Steuerparameter im Motorsteuergerät, dass die Verbrennung optimal durchgeführt wird und die Abgaswerte einer Gesetzesrichtlinie entsprachen. Z.B. muss ein neuer Motor, der vom Fließband geliefert wird, mittels einer Steuereinheit geregelt werden, d.h. es müssen Zündzeitpunkte, Einspritzmenge an Brennstoff, Zündwinkel, etc. optimal aufeinander abgestimmt sein, so dass für den Motor kein Schaden entsteht und doch das maximal mögliche an Energie bei minimalen Abgaswerten rausgeholt wird. Kalibrierung bedeutet auch, dass das Fahrgefühl vermittelt wird, das für das Fahrzeug gewünscht wird. Kalibrierung bedeutet auch, dass das Ansprechverhalten des Fahrzeugs, Triebstranges oder einer Triebstrangkomponente, also z.B. wenn der Fahrer auf das Gaspedal oder Bremspedal steigt, ausgewogen ist. Auch das vermittelt einen Eindruck über die Menge an Parametern und damit verbundenen Daten, die bei einer solchen Kalibrierung anfallen.

Herkömmliche Vergleiche oder Auswertungen scheitern an der großen Datenmenge, an einer fehlenden Visualisierung und an leistungsfähigen Vergleichen. Die aktuell verfügbaren Algorithmen (>200) für "Data Mining" scheitern an Kennlinien (2D) bzw. Kennfeldern (3D), die einen wesentlichen Bestandteil insbesondere von Kalibrierdaten bilden.

Die Aufgabe der vorliegenden Erfindung war es daher, aus Daten mit Parametern eines Fahrzeugs, Triebstranges oder einer Triebstrangkomponente beliebiger Herkunft und in beliebigem Format technisch relevantes Wissen zu extrahieren und für die weitere Anwendung bereitzustellen.

Zur Lösung dieser Aufgabe ist das eingangs beschriebene Verfahren dahingehend verbessert, dass zuerst eine statistische Analyse zur Ermittlung der minimalen und maximalen Achsenwerte der zu gleichen Parametern gehörigen Daten durchgeführt wird, danach die Daten in ein einheitliches Format umgewandelt und komprimiert werden, die zu gleichen Parametern gehörigen Daten mit einheitlichen Achsen und gleicher Anzahl an Stützstellen versehen werden, wobei sich der Start- und Endwert der Achsen aus den ermittelten minimalen und maximalen Achsenwerten ergibt, und die derart umgewandelten Daten als Basis für eine nachfolgende Verarbeitung verwendet werden. Damit können vorteilhafterweise allfällige Korrelation zwischen Parameter der Daten aufgezeigt werden, es kann eine Vorbedatung von neuen Projekten auf Basis historischer Informationen durchgeführt werden, ein Clustering bzw. die Gruppierung von Parametern kann erfolgen (Label A hat immer dieselben Werte in Variante A,B,C), es gibt die Möglichkeit für Zeitreihenanalysen (Aussagen über Termin, Aufwand und Qualität eines Datenstandes), für Plausibilitätskontrolle und/oder Fehlererkennung (Ist der Wert eines Parameters plausibel im Zusammenhang mit historischen Datenständen), als auch eine Kalibrierprozessoptimierung durch Aufdecken von Schwachstellen im Prozess kann durchgeführt werden. Um die Parameterdaten vergleichbar zu machen, werden die zu gleichen Parametern gehörigen Daten mit einheitlichen Achsen und gleicher Anzahl an Stützstellen versehen. Damit - und in weiter verbesserten Ausführungsformen wie nachfolgend erläutert - kann der Vergleich unabhängig von Typ/Einheit/Achse der Parameter der Daten weniger aufwendig und rascher durchgeführt werden.

Vorzugsweise werden dazu die Daten in Bezug auf die Achsen normalisiert, vorteilhafterweise indem eine Anzahl von Stützstellen für die Achsen festgelegt wird und diese Anzahl von Stützstellen über den Achsenbereich gleichverteilt werden.

Eine weitere vorteilhafte Ausführungsvariante sieht vor, dass das Minimum der jeweiligen, vorzugsweise normalisierten Daten auf die Nulllinie verschoben wird.

Dabei kann eine weitere Vereinfachung und damit schneller Verarbeitung dadurch erreicht werden, dass die Daten auf einen festgelegten Bereich, vorzugsweise Null bis 2³²-2 skaliert werden.

Durch das weitere optionale Merkmal, dass die Daten in ein Zahlensystem zur Basis 64 übergeführt werden, ergibt sich eine Einsparung an notwendigem Speicherplatz.

Eine weitere vorteilhafte Ausführungsform der Erfindung ist dadurch gekennzeichnet, dass die normalisierten Daten mit einer Prüfsumme hinterlegt werden, wodurch ein schnellerer Vergleich ermöglicht ist.

Eine weitere optionale Möglichkeit sieht vor, dass für einen Parameter ein Reifegrad ermittelt wird. Damit können unterschiedliche Analysen anhand des Reifegrades durchgeführt werden. Z.B. können Parameter mit zu geringem Reifegrad ausgefiltert werden. Oder es kann die zeitliche Entwicklung der Reifegrade analysiert werden. Ebenso kann für eine Gruppe von Parameter ein Gesamtreifegrad bestimmt werden. Damit können sowohl eine Datenreduktion als auch die Steigerung der Qualität der Daten erzielt werden.

In der nachfolgenden Beschreibung soll die Erfindung anhand der beigefügten Zeichnungen und am Beispiel von Kalibrierdaten noch näher erläutert werden.

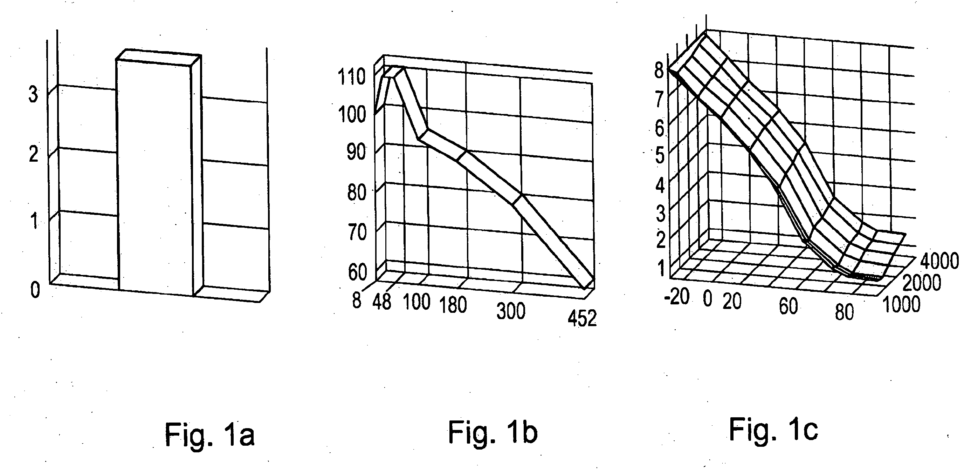

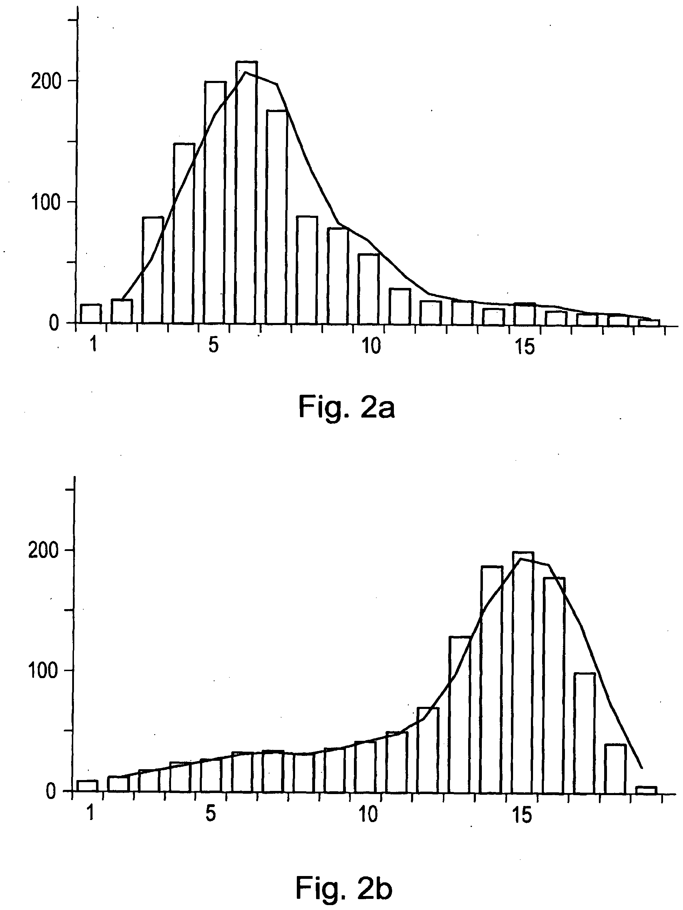

Dabei zeigen die Fig. 1a bis 1c beispielhaft ein-, zwei- und dreidimensionale Kalibrierdaten, und die Fig. 2a und 2b zeigen zwei Diagramme zur Verdeutlichung von Aussagen über die Qualität von Kalibrierdaten auf Grund der Änderungen über die Zeit.

Aus einer großen Menge von Kalibrierdaten, welche wie in den Fig. 1a bis 1c beispielhaft gezeigt ist, in unterschiedlicher Dimensionalität vorliegen können, sollen in möglichst einfacher Weise Information gewonnen und für aktuelle Datenstände genutzt werden. Ein herkömmlicher Vergleich ist oftmals nicht möglich, da er sehr zeitintensiv wäre und sich die Kalibrierdaten außerdem hinsichtlich der Dimension, der Achsenwerte, der Anzahl der Stützstellen und Einheiten unterscheiden können. Daher werden die aus einer Beschreibungsdatei und einem Datenteil bestehenden Kalibrierdaten in einem ersten Schritt nur aus der Datenbank ausgelesen, in das erfindungsgemäße System eingelesen und es wird eine grundlegende statistische Analyse durchgeführt. Üblicherweise sind Daten eines Motorsteuergeräts in Form einer Datendatei (hex-File) und einer Beschreibungsdatei (A2l-File) abgelegt. In diesen Dateien befinden sich alle relevanten Informationen über den in Form eines Kennfeldes oder einer Kennlinie vorliegenden Parameter. Die Beschreibungsdatei dient als Beschreibung für die Datendatei, wobei die beiden immer ein Paar bilden. Daher werden bei der Analyse von Kalibrierdaten sowohl Beschreibungsdatei, als auch Datendatei aus der Datenbank gelesen. Bei anderen Daten kann das,Einlesen einer Datendatei ausreichen.

Die statistische Analyse umfasst zumindest eine Minimum/Maximum-Analyse und die Ermittlung eines "Reifegrades" anhand bestimmter Marker. Der Reifegrad für einen Parameter (Label) wird dabei vom Anwender festgelegt, z.B. aus Erfahrung oder Projektstand. Der Reifegrad kann z.B. als Wert zwischen Null und Eins angegeben werden oder auch als Prozentangabe. Üblich sind z.B. Schritte von 0, 25, 50 oder 100% Reifegrad. Aus diesen Reifegraden kann ein Gesamtreifegrad für eine Gruppe von Labels bestimmt werden, z.B. durch Addieren der einzelnen Reifegrade der zugehörigen Labels.

Anschließend wird in einem nächsten Schritt eine Umwandlung und Komprimierung des Datenteils der Kalibrierdaten in ein einheitliches Format durchgeführt. Dazu werden die gleichen Parameter mit einheitlichen Achsen und derselben Anzahl an Stützstellen versehen. Gleiche Parameter können in unterschiedlichen Datenständen unterschiedliche Achsen und Anzahl an Stützstellen haben. Z.B. ein Label A im Datenstand 1.0 Achse von 0-1000 und 8 Stützstellen und dasselbe Label A im Datenstand 1.1 eine Achse von 50-909 und 17 Stützstellen. Zusätzliche Stützstellen können z.B. durch Interpolation gewonnen werden. Dabei ergibt sich der Start- bzw. Endwert für die Achsen aus den minimalen bzw. maximalen Achsenwerten aller gleichen Labels, die aus der statistischen Analyse erhalten werden. Die Anzahl der Stützstellen kann vorteilhafterweise statisch auf einen bestimmten Wert, beispielsweise 25, festgelegt werden. Danach werden dann die Parameterwerte passend zu den neuen Achsen normalisiert. Dazu können die die festgelegte Anzahl der Stützstellen auf den Achsbereich (minimaler und maximaler Achsenwert) gleichverteilt werden. Durch diese Verarbeitung ist nun erstmals ein performanter Vergleich möglich, der unabhängig von den ursprünglichen Achsen, Typen und/oder Einheiten ist.

Da man es üblicherweise mit einer enorm großen Menge an Daten zu tun hat, werden gemäß einer vorteilhaften Weiterführung der Erfindung diese Daten vor dem Einfügen in die Datenbank noch weiterverarbeitet, um Speicherplatz zu sparen. Zuerst werden die Werte so verschoben, dass das Minimum genau am Nullpunkt liegt und man nur mit positiven Werten arbeiten muss. Schließlich erfolgt noch eine Skalierung der Parameterwerte, sodass nur mehr Ganzzahlen von 0 bis 2³²-2 vorliegen. Dazu wird z.B. ein Faktor festgelegt, mit dem die Parameterwerte multipliziert werden, um zu den Ganzzahlen zu kommen.

Über die normalisierten und skalierten Werte jedes Parameters wird vorzugsweise auch eine Prüfsumme (z.B. CRC32) erstellt. Diese eindeutige Prüfsumme ermöglicht die Prüfung von Gleichheit von zwei Kennfeldern (3D) oder Kennlinien (2D) mit nur einem einzigen Befehl und es erlaubt auch die Clusterung von Werten.

Dabei kann als weiterer Schritt noch vorgesehen sein, diese Ganzzahlen in ein eigenes Zahlensystem überzuführen, was nachfolgend noch genauer beschrieben wird. Es sei zuvor noch erwähnt, dass es bei den Parameterdaten einige Kennlinien (2D) bzw. Kennfeldern (3D) gibt, die immer denselben Wert haben. Dies wäre eine Gerade bzw. eine ebene Fläche. In diesem Fall wird nur ein einziger z-Wert gespeichert, da sich dieser immer wiederholt, was unnötigen Speicherverbrauch vermeiden lässt.

Zu weniger Speicherplatzbedarf trägt auch die Umwandlung der Daten in ein Zahlensystem mit gegenüber dem Dezimalsystem größerer Anzahl an Zeichen, vorzugsweise aus 64 Zeichen, bei. Derartige Zahlensysteme verbrauchen im Vergleich zum Dezimalsystem weniger Speicher, da große Zahlen mit weniger Zeichen dargestellt werden können. Vorzugsweise wird die Basis 64 gewählt, weil die Umrechnung zwischen Dezimal-System und einem Zahlensystem zur Basis 2" mit schnellen Bitshifting-Operationen durchgeführt werden kann (siehe Tabelle 1).

**Tabelle 1:**

| Wert | Zeichen | Wert | Zeichen | Wert | Zeichen | Wert | Zeichen |
|---|---|---|---|---|---|---|---|
| 0 | 0 | 16 | G | 32 | W | 48 | m |
| 1 | 1 | 17 | H | 33 | X | 49 | n |
| 2 | 2 | 18 | I | 34 | Y | 50 | o |
| 3 | 3 | 19 | J | 35 | Z | 51 | p |
| 4 | 4 | 20 | K | 36 | a | 52 | q |
| 5 | 5 | 21 | L | 37 | b | 53 | r |
| 6 | 6 | 22 | M | 38 | c | 54 | s |
| 7 | 7 | 23 | N | 39 | d | 55 | t |
| 8 | 8 | 24 | O | 40 | e | 56 | u |
| 9 | 9 | 25 | P | 41 | f | 57 | v |
| 10 | A | 26 | Q | 42 | g | 58 | w |
| 11 | B | 27 | R | 43 | h | 59 | x |
| 12 | C | 28 | S | 44 | i | 60 | y |
| 13 | D | 29 | T | 45 | j | 61 | z |
| 14 | E | 30 | U | 46 | k | 62 | ( |
| 15 | F | 31 | V | 47 | l | 63 | ) |

Die umgewandelten und komprimierten Daten werden vorzugsweise in einem "Datawarehoüse" zentral abgelegt und ermöglichen die schnelle Generierung komplexer Analysen. Ein Beispiel dafür ist in den Fig. 2a und 2b erläutert. In der Fig. 2a ist über die Zeit die Häufigkeit und/oder das Ausmaß von Veränderungen in den Kalibrierdaten aufgetragen. Erkennbar ist, dass nach einer Anlaufphase des jeweiligen Projektes in den frühen Phasen starke Veränderungen stattfinden, bis schließlich zu Ende des Projektes nur mehr geringe Anpassungen, das "Fine Tuning", erfolgen. Wenn sich also bei einer Analyse von Kalibrierdaten ein Diagramm wie in Fig. 2b ergibt, das einen genau gegenteiligen Änderungsverlauf zeigt, kann daraus auf schlechten Projektablauf und/oder fehlerhafte Daten rückgeschlossen werden.

Um die Datenmengen zu reduzieren und zwecks Verbesserung der Datenqualität wird der Reifegrad jedes Labels herangezogen. Der Reifegrad wird für jedes Label angegeben und liegt zwischen 0% (initial) und 100% (fertig). Bei der Erstellung des oben bereits angesprochenen "Datawarehouse" kann eine Art Filterung erfolgen, in dem nur jene Labels herangezogen werden, welche einen Reifegrad > n% besitzen. Auch kann eine Gewichtung mittels des Reifegrades erfolgen. Dabei werden etwa bei der Erstellung eines Reports oder einer Auswertung jene Labels mit einem höheren Reifegrad bevorzugt behandelt.

Für die Erkennung von Ausreißem sowie für die Darstellung der Uerteilungsfunktion (siehe Abbildung: Normalverteilungskurve) werden jene Labels mit einem Score=0% nicht berücksichtigt.

## Patentansprüche

1. Verfahren zur Verarbeitung von Daten mit Parametern eines Fahrzeugs, Triebstranges oder einer Triebstrangkomponente unterschiedlicher Herkunft, umfassend
- das Auslesen von aus früheren Kalibrierungen von Fahrzeugen, Triebsträngen oder Triebstrangkomponenten gewonnenen Daten aus einer Datenbank
- die Durchführung einer statistischen Analyse zur Ermittlung der minimalen und maximalen Achsenwerte der zu gleichen Parametern eines Fahrzeugs, Triebstranges oder einer Triebstrangkomponente gehörigen Daten,
- die Umwandlung und Komprimierung der aus früheren Kalibrierungen von Fahrzeugen, Triebsträngen oder Triebstrangkomponenten gewonnenen Daten in ein einheitliches Format,
- das Versehen der zu gleichen Parametern eines Fahrzeugs, Triebstranges oder einer Triebstrangkomponente gehörigen Daten mit einheitlichen Achsen und gleicher Anzahl an Stützstellen, wobei sich der Start- und Endwert der Achsen aus den minimalen und maximalen Achsenwerten ergibt, und
- die Verwendung der derart umgewandelten Daten als Basis für eine Kalibrierung eines Motorsteuergeräts eines Verbrennungsmotors, eines Fahrzeugs, eines Triebstranges oder einer Triebstrangkomponente.

2. Verfahren nach Anspruch 1, **dadurch gekennzeichnet, dass** die Daten in Bezug auf deren Achsen normalisiert werden.

3. Verfahren nach Anspruch 2, **dadurch gekennzeichnet, dass** eine Anzahl von Stützstellen für die Achsen festgelegt wird und diese Anzahl von Stützstellen über den Achsenbereich gleichverteilt werden.

4. Verfahren nach einem der Ansprüche 1 bis 3, **dadurch gekennzeichnet, dass** das Minimum der jeweiligen Daten auf die Nulllinie verschoben wird.

5. Verfahren nach Anspruch 4, **dadurch gekennzeichnet, dass** die Daten auf einen festgelegten Bereich, vorzugsweise Null bis 2³²-2, skaliert werden.

6. Verfahren nach Anspruch 5, **dadurch gekennzeichnet, dass** die Daten in ein Zahlensystem zur Basis 64 übergeführt werden.

7. Verfahren nach einem der Ansprüche 2 bis 6, **dadurch gekennzeichnet, dass** die normalisierten Daten mit einer Prüfsumme hinterlegt werden.

8. Verfahren nach einem der Ansprüche 1 bis 7, **dadurch gekennzeichnet, dass** für einen Parameter ein Reifegrad bestimmt wird.

9. Verfahren nach Anspruch 8, **dadurch gekennzeichnet, dass** Parameter mit einem Reifegrad unterhalb einer bestimmten Grenze ausgefiltert werden.

10. Verfahren nach einem der Ansprüche 1 bis 8, **dadurch gekennzeichnet, dass** die umgewandelten Daten zur Bewertung der aus früheren Kalibrierungen gewonnenen Daten verwendet werden.

## Claims

1. A method for processing data with parameters of a vehicle, power train or a power train component of different origin, comprising:
- reading out data obtained from earlier calibrations of vehicles, power trains or power train components from a database,
- carrying out a statistical analysis for determining the minimum and maximum axis figures of the data associated with the same parameters of a vehicle, power train or power train component,
- converting and compressing the data obtained from earlier calibrations of vehicles, power trains or power train components into a common format,
- providing the data associated with the same parameters of a vehicle, power train or power train component with common axes and the same number of sampling points, wherein the start and end figures of the axes result from the minimum and maximum axis figures, and
- using the data thus converted as a basis for a calibration of an engine control unit of an internal combustion engine, a vehicle, a power train or a power train component.

2. The method as claimed in claim 1, **characterised in that** the data is normalised in relation to the axes thereof.

3. The method as claimed in claim 2, **characterised in that** a number of sampling points for the axes is established and this number of sampling points is equally distributed over the axis area.

4. The method as claimed in any one of claims 1 to 3, **characterised in that** the minimum of the respective data is shifted onto the zero line.

5. The method as claimed in claim 4, **characterised in that** the data is scaled onto a set range of preferably zero to 2³²-2.

6. The method as claimed in claim 5, **characterised in that** the data is transferred into a number system with a base 64.

7. The method as claimed in any one of claims 2 to 6, **characterised in that** the normalised data is stored together with a checksum.

8. The method as claimed in any one of claims 1 to 7, **characterised in that** a degree of maturity is determined for a parameter.

9. The method as claimed in claim 8, **characterised in that** parameters with a degree of maturity below a certain limit are filtered out.

10. The method as claimed in any one of the claims 1 to 8, **characterised in that** the converted data is used for evaluating the data obtained from earlier calibrations.

## Revendications

1. Procédé de traitement de données avec des paramètres d'un véhicule, d'une chaîne de transmission ou d'un composant de chaîne de transmission d'origine différente, comportant
- la lecture de données, acquises d'étalonnages antérieurs de véhicules, de chaînes de transmission ou de composants de chaîne de transmission, depuis une banque de données
- l'exécution d'une analyse statistique pour la détermination des valeurs d'axe minimales et maximales des données appartenant aux mêmes paramètres d'un véhicule, d'une chaîne de transmission ou d'un composant de chaîne de transmission,
- la conversion et la compression des données, acquises d'étalonnages antérieurs de véhicules, de chaînes de transmission ou de composants de chaîne de transmission, dans un format uniforme,
- l'attribution aux données, appartenant aux mêmes paramètres d'un véhicule, d'une chaîne de transmission ou d'un composant de chaîne de transmission, d'axes uniformes et d'un même nombre de points nodaux, dans lequel la valeur de début et de fin des axes résulte des valeurs d'axe minimales et maximales, et
- l'emploi des données converties de cette manière en tant que base pour un étalonnage d'un appareil de commande d'un moteur, d'un moteur à combustion interne, d'un véhicule, d'une chaine de transmission ou d'un composant de chaine de transmission.

2. Procédé selon la revendication 1, **caractérisé en ce que** les données sont normalisées par rapport à leurs axes.

3. Procédé selon la revendication 2, **caractérisé en ce qu'**un nombre de points nodaux est défini pour les axes et ce nombre de points nodaux est réparti uniformément sur les secteurs d'axe.

4. Procédé selon l'une quelconque des revendications 1 à 3, **caractérisé en ce que** le minimum des données concernées est décalé sur la ligne zéro.

5. Procédé selon la revendication 4, **caractérisé en ce que** les données sont mises à l'échelle sur une plage définie, de préférence de 0 à 2³²-2.

6. Procédé selon la revendication 5, **caractérisé en ce que** les données sont transformées dans un système de numération de base 64.

7. Procédé selon l'une quelconque des revendications 2 à 6, **caractérisé en ce que** les données normalisées sont pourvues d'une somme de contrôle.

8. Procédé selon l'une quelconque des revendications 1 à 7, **caractérisé en ce qu'**un degré de maturité est déterminé pour un paramètre.

9. Procédé selon la revendication 8, **caractérisé en ce que** des paramètres ayant un degré de maturité en dessous d'une limite déterminée sont éliminés par filtrage.

10. Procédé selon l'une quelconque des revendications 1 à 8, **caractérisé en ce que** les données converties sont employées pour l'évaluation des données acquises d'étalonnage antérieurs.
